# EUROPEAN PATENT APPLICATION

(11) **EP 1 521 236 A2**
(43) Date of publication of application: **06.04.2005**
(21) Application number: 04022429.7
(22) Date of filing: 21.09.2004
(51) Int. Cl.: G09G 3/36

(54) **Electronic display device and method of controlling such a display device**

(30) Priority: 30.09.2003 JP 2003339989
(71) Applicant: Kabushiki Kaisha Toshiba, Tokyo 105-8001 (JP)
(72) Inventor: Kasashima, Masahiko, c/o Toshiba Corporation, Minato-ku Tokyo 105-8001 (JP)
(74) Representative: Henkel, Feiler & Hänzel

(57) **Abstract**

An electronic device includes a display (13), a connector (19) to which an external video signal is input, and a control unit (21) which performs signal switching with respect to an internal display signal and the external video signal input to the connector (19) to display one of these signals on the display (13).

## Description

The present invention relates to an electronic device having a display, and more particularly to an electronic device having a video input connector through which a video signal from an external device is input, and a display control method.

Conventionally, an electronic device, e.g., a personal computer (PC), can be connected to a household TV receiver (television receiver) via a video output connector such as an RGB/DVI (Digital Visual Interface). With this video output connector, a PC screen can be displayed on the TV receiver, so that the TV receiver can be used as a monitor, or moving picture such as digital versatile disk (DVD) video data can be reproduced on the large screen of the TV receiver (see, for example, Jpn. Pat. Appln. KOKAI Publication No. 2000-4410).

As described above, the conventional PC with the video output connector has a function of outputting a display signal from the PC to the TV receiver through the video output connector and displaying video data on the screen of the TV receiver. Thus, the TV receiver can be used as a monitor. Therefore, the video output connector produces an advantageous effect that video signals of a conventional PC, particularly a notebook-sized PC having a small display screen, can be reproduced on the large screen of the TV receiver, because it allows the TV receiver to be used as a monitor of the PC. However, a recent notebook-sized PC has a large screen, and the need for using the TV receiver as a monitor has reduced.

Contrarily, since the latest PC has a very large screen as described above, there is a demand for a function of inputting and displaying video data of a compact TV receiver on a large screen of a PC. However, the conventional PC has the video output connector but no video input connector. Therefore, video data from the TV receiver cannot be input to the PC and displayed thereon.

Under the circumstances, it is desired to provide an electronic device that can receive a video signal from another electronic device, such as a TV receiver, and display video data on the display.

According to one aspect of the present invention, there is provided an electronic device, comprising a display; a connector to which an external video signal is input; and a control unit which performs signal switching with respect to an internal display signal and the external video signal input to the connector to display one of these signals on the display.

According to another aspect of the present invention, there is provided a display control method of controlling a display of an electronic device, the method comprising inputting an external video signal to a first connector provided in the display; and performing signal switching with respect to an internal display signal and the external video signal input to the first connector to display one of these signals on the display.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an external perspective view showing a personal computer with the cover opened, according to an embodiment of the present invention;
FIG. 2 is a block diagram showing a circuit configuration of a main part of the personal computer of the embodiment; and
FIG. 3 is a flowchart showing a display switching operation of the embodiment.

Embodiments of the present invention will be described below with reference to the drawings.

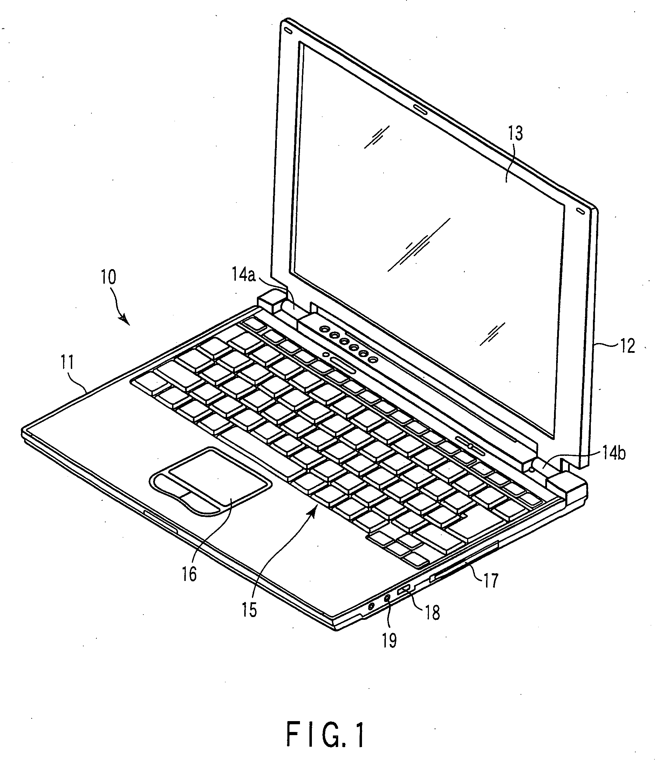

FIG. 1 is an external perspective view showing an example of the configuration of a notebook-sized personal computer to which the present invention is applied. Referring to FIG. 1, a personal computer (PC) 10 comprises a case main body 11 and a cover body 12. A display panel 13 including a display device, for example, a LCD (liquid crystal display) panel, is provided on the inner surface of the cover body 12. The cover body 12 is rotatably held to a back end portion of the case main body 11 by hinges 14a and 14b.

A keyboard (KB) 15 and a touch pad 16 are mounted on the upper surface of the case main body 11. A circuit board, a speaker, etc. (which are not shown) are arranged inside the case main body 11. A parallel connector, a CRT output connector, a S-video output connector, a USB connector, a power supply connector, etc. (which are not shown) are provided on a backside portion of the case main body 11. A DVD-R/RW drive, a headphones output/audio output connector, a power switch, etc. (which are not shown) are provided on a left side portion of the case body 11. A PC card slot 17, a display input connector (RGB/DVI (Digital Visual Interface)) 18, a video input connector (composite video connector/S-video connector) 19, etc. are provided on a right side portion of the case main body 11. A display signal from another PC (not shown) is input to the display input connector 18, and a video signal from a TV receiver is input to the video input connector 19.

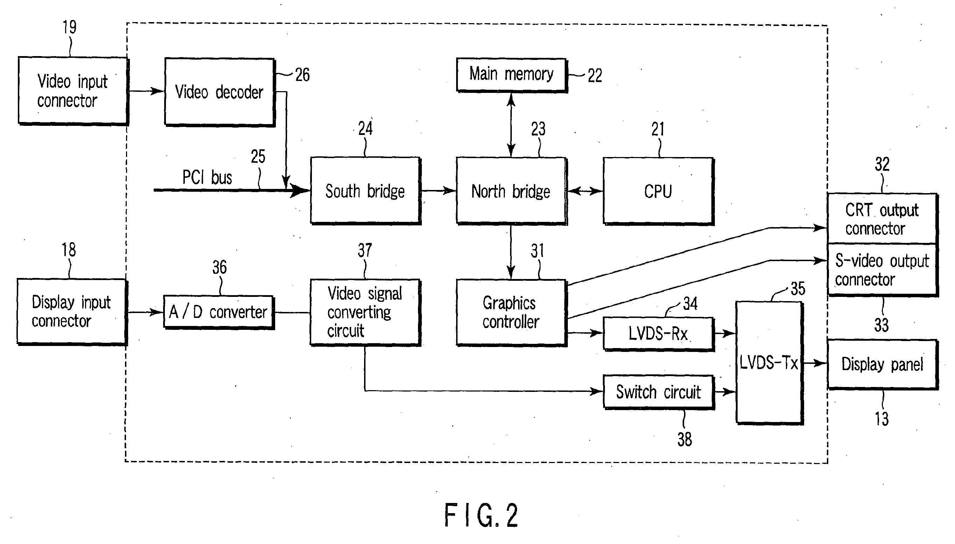

A circuit configuration of a main part of a processing device mounted in the case main body 11 of the PC 10 will be described with reference to FIG. 2.

In FIG. 2, a reference numeral 21 denotes a CPU, 22 a main memory, 23 a north bridge and 24 a south bridge.

The CPU 21 controls the overall PC system. It operates in accordance with a control program (BIOS) stored in a BIOS-ROM (not shown). The main memory 22 is a memory device, from or in which the CPU 21 can read or write data. It temporarily stores necessary data in accordance with the control operation of the CPU 21.

The north bridge 23 is a bridge device, which connects the CPU 21 with the main memory 22, the south bridge 24, a graphics controller 31, etc. The south bridge 24 is a bridge device, which connects the north bridge 23 with a PCI bus 25. The PCI bus 25 is connected to an input section including the keyboard 15 and the touch pad 16 shown in FIG. 1. Operations of the keyboard 15, the touch pad 16, etc. are controlled by a keyboard controller (not shown). The PCI bus 25 is further connected to the video input connector 19 via a video decoder 26.

Data, control commends and the like, input by operations through the keyboard 15, the touch pad 16 or a mouse, etc., are supplied to the CPU 21 through the PCI bus 15, the south bridge 24, the north bridge 23, and so on. The CPU 21 generates an internal display signal using the main memory 22, etc., based on the input data. The generated internal display signal is output to the graphics controller 31 via the north bridge 23.

The graphics controller 31 is connected to a CRT output connector 32 and an S-video output connector 33. It is also connected to the display panel 13 through an LVDS-Rx (Low Voltage Differential Signaling) 34 and an LVDS-Tx 35. The LVDS is a digital transmission system for a flat panel display such as the display panel 13. This is a differential transmission system for transmitting a signal with a potential difference between two signal lines.

The graphics controller 31 normally outputs the internal display signal, generated under the control of the CPU 21, to the display panel 13 via the LVDS-Rx 34 and the LVDS-Tx 35. When an operation for outputting a display signal to an external device is performed by the keyboard 15 or the like, the graphics controller 31 outputs the display signal to the CRT output connector 32 or the S-video output connector 33 under the control of the CPU 21.

When a video signal from an external TV receiver or the like is input to the video input connector 19, it is decoded by the video decoder 26 and supplied to the north bridge 23 via the south bridge 24. At this time, if an operation for switching an internal display signal to an external display signal is performed by the keyboard 15 or the like, the CPU 21 replaces the internal display signal with the external display signal, which has been supplied from the video input connector 19 to the north bridge 23 through the video decoder 26 and the south bridge 24, and outputs the external display signal to the graphics controller 31. The graphics controller 31 outputs the external display signal, switched by the CPU 21, to the display panel 13 via the LVDS-Rx 34 and LVDS-Tx 35.

In the above case, the internal display signal and the external display signal can be simultaneously displayed on the display panel 13 by the multi-window function.

The mode of displaying the internal display signal or the external display signal can be designated arbitrarily by, for example, displaying the display modes on the screen based on a key operation and selecting one of the display modes. Otherwise, the mode can also be designated directly by depressing a function key.

When a display signal from another PC is input to the display input connector 18, this external display signal is input to the LVDS-Tx 35 through an A/D converter 36, a video signal converting circuit 37 and a switch circuit 38. The video signal converting circuit 37 converts a digital signal output from the A/D converter 36 to a signal that can be processed by the LVDS-Tx 35. The switch circuit 38 is normally off, and prohibits an external input from the display input connector 18 to the LVDS-Tx 35.

In the above state, if the input mode is switched to the "external" mode by the operation of the keyboard 15 or the like, the switch circuit 38 is switched on upon instructions from the keyboard controller. An external input to the display input connector 18 is supplied to the LVDS-Tx 35 through the A/D converter 36, the video signal converting circuit 37 and the switch circuit 38, and displayed on the display panel 13. At this time, the LVDS-Rx 34 is switched off, and an input from the graphics controller 31 to the LVDS-Tx 35 is cut off.

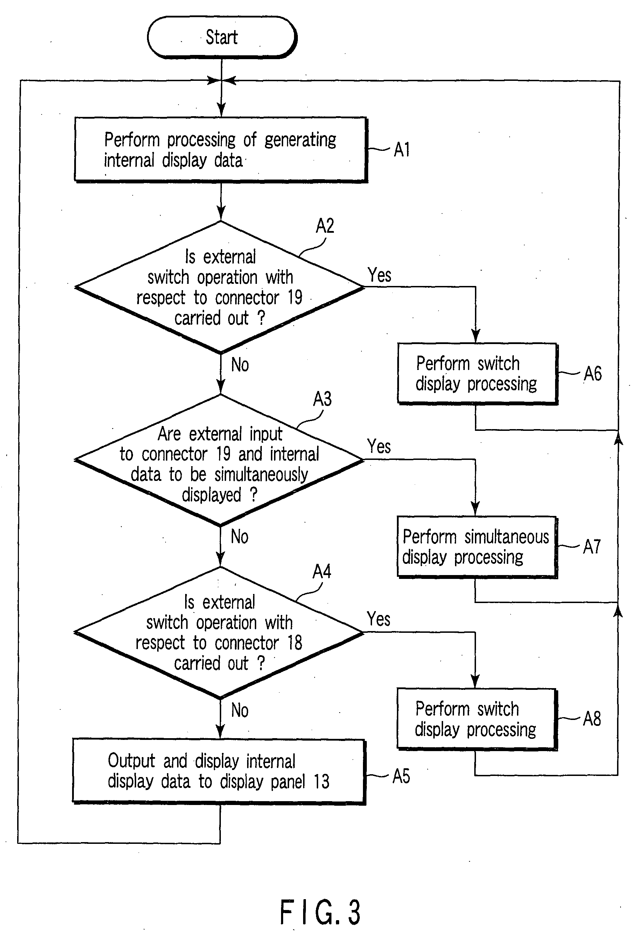

A display processing operation in the above embodiment will now be described with reference to the flowchart shown in FIG. 3.

Data input by a key operation of the keyboard 15 or an operation of the touch pad 16, the mouse or the like is supplied to the CPU 21 through the PCI bus 25, the south bridge 24, the north bridge 23, etc.

The CPU 21 generates an internal display signal using the main memory 22, etc., based on the input data (a step A1). Then, the CPU 21 checks whether an external switch operation with respect to the video input connector 19 (i.e., an operation to select an external video signal supplied from an external TV receiver) is carried out or not (a step A2). If the external switch operation is not carried out, the CPU 21 checks whether a simultaneous display operation to simultaneously display an external video signal input to the video input connector 19 and an internal display signal is carried out or not (a step A3). If the simultaneous display operation is not carried out, the internal display signal is output to the graphics controller 31 via the north bridge 23.

The CPU 21 also checks whether an external switch operation with respect to the display input connector 18 (i.e., an operation to select an external display input from another PC) is carried out or not (a step A4). If the external switch operation is not carried out, the internal display signal output from the graphics controller 31 is supplied to the display panel 13 via the LVDS-Rx 34 and the LVDS-Tx 35 (a step A5), because the switch circuit 38 is off and the LVDS-Rx 34 is on.

As described above, normally, the internal display signal generated under the control of the CPU 21 is supplied to the display panel 13 through the graphics controller 31.

When a video signal (a composite video signal or an S-video signal) of the external TV receiver is to be displayed on the display panel 13 of the PC 10, the video signal output from the TV receiver is input to the video input connector 19. At the same time, the switching operation for switching to the external video is carried out by a key operation of the keyboard 15.

The external video signal input to the external video input connector 19 is decoded by the video decoder 26, and thereafter supplied to the north bridge 23 via the PCI bus 25 and the south bridge 24. When the CPU 21 detects the operation of switching to the external video in the step A2, it advances to a step A6. In the step A6, the CPU selects the external video signal supplied to the north bridge 23, instead of the internal display signal, and supplies the selected signal to the graphics controller 31. The graphics controller 31 outputs the external video signal supplied through the north bridge 23 to the display panel 13 via the LVDS-Rx 34 and the LVDS-Tx 35.

When the operation of switching to the external video is carried out as described above, the CPU 21 outputs the external video signal input to the video input connector 19, instead of the internal display signal, to the graphics controller 31 through the north bridge 23, and displays it on the display panel 13.

In the state where the external video signal is input to the video input connector 19, if an instruction to simultaneously display the internal display signal and the external video signal is input by a key operation, the CPU detects the simultaneous display instruction in the step A3 and advances to a step A7. In the step A7, the CPU 21 performs control of outputting the internal display signal and the external video signal, which is input to the north bridge 23, to the graphics controller 31, and simultaneously displaying both signals by the multi-window function.

The graphics controller 31 outputs the internal display signal and the external video signal to the display panel 13 via the LVDS-Rx 34 and the LVDS-Tx 35 under the control of the CPU 21, so that both signals are simultaneously displayed by the multi-window function. The display ratio and the display positions of the internal display signal and the external video signal can be arbitrarily designated by multi-window control.

When a display signal from another PC is to be displayed on the display panel 13 of the PC 10, the display signal output from the other PC is input to the display input connector 18. At the same time, the operation of switching to the external display signal is carried out by a key operation. This switching operation is detected by the keyboard controller (the step A4), and the switch circuit 38 is switched on and the LVDS-Rx 34 is switched off (a step A8). Thus, a signal input from the graphics controller 31 to the LVDS-Tx 35 is prohibited.

The external display signal input to the display input connector 18 from the other PC is converted to a digital signal by the A/D converter 36. The digital signal is input to the video signal converting circuit 37, converted therein to a signal adapted to LVDS, and supplied to the display panel 13 through the switch circuit 38 and the LVDS-Tx 35.

When the external switch operation with respect to the display input connector 18 described above is performed, the switch circuit 38 is turned on and the LVDS-Rx 34 is turned off. The external display signal input from the other PC to the display input connector 18, instead of the display signal output from the graphics controller 31, is supplied to the display panel 13 and displayed thereon.

The above embodiment comprises the video input connector (RGB/DVI) 18, to which a display signal from another PC is input, the video input connector (composite video connector/S-video connector) 19, to which a video signal from an external TV receiver is input. These connectors make it possible to switch an internal display signal to an external display signal from another PC and display the external display signal on the display panel 13, to switch an internal display signal to an external video signal from an external TV receiver and display the external video signal, or to simultaneously display the internal display signal and the external video signal by the multi-window function.

Accordingly, for example, a video signal from a compact TV receiver can be input to the PC 10 and displayed on the display panel 13. Further, a display signal output from a desktop PC having no display can be input to the PC 10 and displayed on the display panel 13. Furthermore, even if the PC 10 does not have a TV receiving tuner, it can receive a TV reception signal output from a PC having a TV receiving tuner and display it on the display panel 13.

In addition, in the PC 10 of the above embodiment, the circuit portion, which is turned to the standby state due to the signal switching, is switched to a low-power consumption mode, thereby saving power.

For example, in the case of normal display and the case where an external video signal input to the video input connector 19 is to be displayed on the display panel 13, the A/D converter 36 and the video signal converting circuit 37 connected to the display input connector 18 are in the standby state and the operations thereof are stopped.

In the case where an external display signal from another PC input to the display input connector 18 is to be displayed on the display panel 13, the A/D converter 36 and the video signal converting circuit 37 are operated and the switch circuit 38 is turned on. However, the circuits necessary for the normal display (i.e., the CPU 21, the main memory 22, the north bridge 23, the south bridge 24, the video decoder 26 and the graphitic controller 31) are in the standby state. Therefore, these circuits are switched to a low-power consumption mode. At this time, the LVDS-Rx 34 is turned off, so that the signal output from the graphics controller 31 cannot be input to the LVDS-Tx 35. The stop of operations of the circuits in the standby state and the switching to the low-power consumption mode are performed by the control program (BIOS).

As described above, the circuit portion, which is turned to the standby state due to the signal switching, is switched to a low-power consumption mode, with the result that the power can be saved.

In the above embodiment, the present invention is applied to a notebook-sized PC as an electronic device. However, it can be applied to, for example, a desktop PC in the same manner.

## Claims

1. An electronic device, **characterized by** comprising:
a display (13);
a connector (19) to which an external video signal is input; and
a control unit (21) which performs signal switching with respect to an internal display signal and the external video signal input to the connector (19) to display one of these signals on the display (13).

2. The electronic device according to claim 1, **characterized by** further comprising
a second connector (18) to which an external display signal is input;
wherein the control unit (21, 38 ,34) performs signal switching with respect to the internal display signal, the external display signal input to the second connector (18) and the external video signal input to the first connector (19) to display one of these signals on the display (13).

3. An electronic device, **characterized by** comprising:
a display (13);
a first connector (18) to which an external display signal is input;
a second connector (19) to which an external video signal is input;
a first control unit (38, 34) which performs signal switching with respect to an internal display signal and the external display signal input to the first connector (18) to display one of these signals on the display (13); and
a second control unit (21) which performs signal switching with respect to the internal display signal and the external video signal input to the second connector (19) to display one of these signals.

4. The electronic device according to claim 3, **characterized in that** the second unit (21) performs signal switching with respect to the internal display signal and the external video signal input to the second connector to display simultaneously display these signals on the display (13).

5. The electronic device according to any one of claims 1 to 4, **characterized by** further comprising a switching unit which switches a circuit, which is brought in a low-power consumption mode due to the signal switching.

6. A display control method of controlling a display (13) of an electronic device, the method **characterized by** comprising:
inputting an external video signal to a first connector (19) provided in the display (13); and
performing signal switching with respect to an internal display signal and the external video signal input to the first connector (19) to display one of these signals on the display (13).

7. The display control method according to claim 6, **characterized by** further comprising:
inputting an external display signal to a second connector (18); and
performing signal switching with respect to the internal display signal, the external display signal input to the second connector (18) and the external video signal input to the first connector (19) to display one of these signals on the display (13).

8. A display control method of controlling a display (13) of an electronic device, the method **characterized by** comprising:
inputting an external display signal to a first connector (18);
inputting an external video signal to a second connector (19);
performing signal switching with respect to an internal display signal and the external display signal input to the first connector (18) to display one of these signals on the display (13); and
performing signal switching with respect to the internal display signal and the external video signal input to the second connector (19) to display one of these signals.

9. The display control method according to claim 8, **characterized by** further comprising performing signal switching with respect to the internal display signal and the external video signal input to the second connector to display simultaneously display these signals on the display (13).

10. The display control method according to any one of claims 6 to 9, **characterized by** further comprising switching a circuit, which is brought in a low-power consumption mode due to the signal switching.
